# EUROPEAN PATENT SPECIFICATION

(11) **EP 3 788 861 B1**
(45) Date of publication and mention of the grant of the patent: **11.10.2023**
(21) Application number: 20194840.3
(22) Date of filing: 07.09.2020
(51) Int. Cl.: A01D 46/26, A01D 46/253

(54) **PORTABLE SHAKER APPARATUS FOR HARVESTING OLIVES**
TRAGBARE SCHLAGVORRICHTUNG ZUR ERNTE VON OLIVEN
BATTEUR PORTABLE POUR LA RÉCOLTE DES OLIVES

(30) Priority: 09.09.2019 IT 201900003041 U
(43) Date of publication of application: 10.03.2021
(73) Proprietor: Active S.r.l., 26037 San Giovanni in Croce (Cremona) (IT)
(72) Inventor: BUOLI, Giorgio, 26040 Gussola (CR) (IT)
(74) Representative: Robba, Pierpaolo

(56) References cited:
- EP-A1- 1 175 823
- EP-A1- 2 384 614
- EP-A1- 3 430 883
- WO-A1-2012/143225
- CN-Y- 201 294 764
- ES-U- 1 068 928

## Description

### Technical Field of the Invention

The present invention relates to a portable shaker apparatus for harvesting olives. More particularly, the present invention relates to a portable shaker apparatus for harvesting olives of the type comprising a plurality of oscillating prongs.

### Prior Art

A wide range of portable shaker apparatuses for harvesting olives are known, which generally include a plurality of rotating or vibrating beater members mounted to a support structure handheld by the operator and driven by a motorized drive assembly. In use, said beater members beat the tree branches so as to cause detachment and fall of the olives.

Particularly, apparatuses having two oscillating arms are known, provided with beating prongs and driven with reciprocating motion by a transmission system connected to a motorized drive assembly, whereby the prong holder arms move with reciprocating rotating motion about respective pivot pins. Said reciprocating rotating motion takes place in the plane in which the prongs lie, i.e. about respective rotation axes (one per each arm) perpendicular to the plane in which the prongs lie.

Said prong holder arms are mounted to a head of the apparatus, which head in turn is connected to a shaft maneuvered by an operator. Said shaft may possibly be telescopic, so as to enable the operator to reach the highest branches of the trees.

During use, the apparatus is maneuvered by an operator so as to insert the prongs among the branches of the olive trees: by virtue of the reciprocating rotating motion described above, the prongs beat the branches, thus causing the olives to become detached from their stalks attached to the twigs.

Such shaker apparatuses are known, for instance, from EP 3430883A1 and ES 1068928U. The known shaker apparatuses, however, have remarkable limitations.

In particular, in the shaker apparatuses of the known type the prong holder arms, in order to be able to rotate with their reciprocating rotating motion, are rotatably mounted to the head of the apparatus by means of a pivot pin with the interposition of a rolling bearing, whose inner ring is fixed to the pivot pin and whose outer ring is fixed to the respective prong holder arm.

It is known that rolling bearings (such as, for example, ball bearings), especially if they are small in size, cannot withstand axial loads, nor tilting torques, unless said loads and torques are very small.

On the other hand, it must be considered that, in use, the prongs of a shaker apparatus - and consequently the prong holder arms - are subjected both to stresses in the plane in which they lie and in which the prongs move, and to stresses in a plane perpendicular thereto, or at least with a component perpendicular to said plane.

These latter stresses are due both to the reaction of the branches during movement of the prongs and to the movements impressed by the operator, which usually performs not only movements from outside the branches to inside the branches, but also from top downwards.

Each prong holder arm, at its pivot pin, is thus subjected to considerable tilting torques, which the rolling bearing interposed between said prong holder arm and the respective pivot pin is not able to withstand.

As a result, within a few hundred hours of use, the rolling tracks of the bearing wear out and deform, and the rolling elements (e.g. balls) are no longer correctly retained within these tracks. This results in vibrations that are annoying to the operator, or even failures due to the breakage of the rolling bearing or parts thereof.

Therefore, the main object of the invention is to overcome the above-mentioned technical limitations of the shaker apparatuses of the known type, by providing a shaker apparatus that is able to withstand the stresses to which it is subjected in use.

Another object of the present invention is to provide a shaker apparatus that has improved reliability compared with the known apparatuses.

A further obj ect of the present invention is to provide a shaker apparatus in which the vibrations transmitted to the operator are reduced compared with the known apparatuses.

These and other objects are achieved by a portable shaker apparatus for harvesting olives as claimed in the appended claims.

### Summary of the invention

The shaker apparatus according to the invention comprises one or more (preferably two) prong holder arms which are rotatably mounted to the head of the apparatus by means of respective pivot pins, and is characterized in that each prong holder arm is mounted to its corresponding pivot pin with the interposition of at least two rolling bearings.

Said at least two bearings can be arranged side by side to each other or preferably at a distance from each other.

In a preferred embodiment of the invention, there are provided two rolling bearings located at a distance from each other.

In this preferred embodiment of the invention, said bearings have a mutual distance of at least 2 mm, preferably of at least 3 mm.

In a preferred embodiment of the invention, said rolling bearings are ball bearings.

Thanks to the provision of two rolling bearings arranged at a distance from each other, tilting torques to which the prong holder arms are subjected during use of the apparatus according to the invention are effectively managed.

As a result, the deformation and wear effect of the rolling tracks of the bearings is reduced and the reliability of the shaker is improved.

In addition, owing to the fact that the deformation and wear effect of the rolling tracks of the bearings is reduced, there is also a significant reduction in the vibrations transmitted to the operator.

### Brief Description of the Drawings

A preferred embodiment of the invention, given by way of non-limiting example in order to better illustrate the features and advantages of the invention, will be described in detail below with reference to the annexed drawings, in which:
Figure 1 is a perspective view of the head of a portable shaker apparatus according to the invention;
Figure 2 is a sectional view along a plane parallel to the plane in which the prongs of the head of Figure 1 lie;
Figure 3 is a sectional view along a plane perpendicular to the plane in which the prongs of the head of Figure 1 lie; and
Figure 4 shows a detail IV of Figure 3 on an enlarged scale.

### Detailed Description of an Embodiment of the Invention

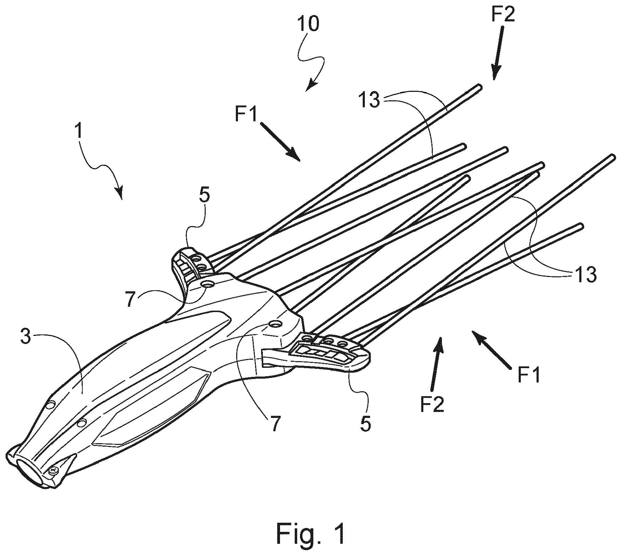

Figures 1-3 show the head 1 of a portable shaker apparatus according to the invention.

In a manner known per se, the head 1 is mounted to a shaft (not shown), possibly a telescopic shaft; near the opposite end of said shaft there is a handle, which allows an operator to grasp and maneuver the shaker apparatus.

The head 1 of the shaker apparatus comprises: a support frame 3 and one or more prong holder arms 5 (in the illustrated embodiment, two), which are rotatably mounted to the frame 3 and project from the opposite sides thereof. In particular, each prong holder arm 5 is rotatably mounted to a respective pivot pin 7, which is fixed to and integral with the frame 3 of the head 1.

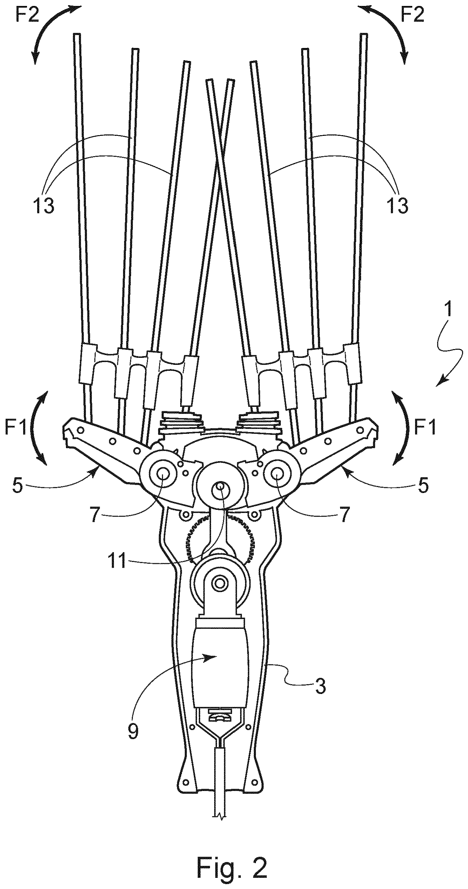

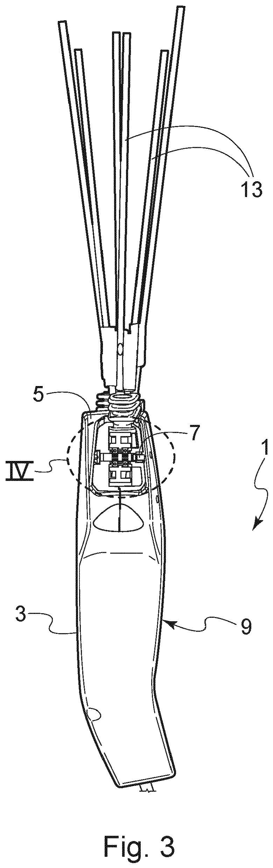

Within the frame 3 of the head 1 there is housed a motion transmission system 9 (shown only very schematically in Figures 2 and 3), which enables motion to be transmitted from a drive device (such as, for example, an electric motor) to the prong holder arms 5.

In a manner known per se, said drive device (not shown) can be mounted to the maneuvering shaft, near the end opposite to the end carrying the head 1.

The motion transmission system transfers motion from the drive device to the prong holder arms 5, which for this purpose are connected to a stem 11 of the motion transmission system 9. Each prong holder arm 5 carries a plurality of prongs 13 which extend from the respective prong holder arms and are preferably arranged uniformly distributed along the extension thereof. The prongs 13 are, preferably, inclined at various angles with respect to one another and to their respective arm.

In use, the motion transmission system 9 comprises an end member 11, which is movable with reciprocating rectilinear motion and acts as a thrust element for the prong holder arms 5: by effect of the thrust of the stem 11, each prong holder arm 5 rotates about its respective pivot pin 7; the reciprocating rectilinear motion of the end member 11 of the motion transmission system 9 is thus transformed into a reciprocating rotary motion of the prong holder arms 5 (double arrows f1).

As a result, the prongs 13 also move with an alternating rotary motion (double arrows f2), which occurs substantially in the plane in which the prong arms 5 lie, or in a plane substantially parallel thereto.

By virtue of this reciprocating rotary motion, the prongs 13 beat the olive branches, causing detachment and fall of the olives.

As illustrated in Figure 1, in use, the prongs 13 are subjected to forces F1 lying in the plane in which the prongs 13 move, and substantially attributable to the resistance of the branches.

However, said prongs are also subjected to additional forces F2 lying in a plane perpendicular to the plane in which the prongs 13 move, or at least in an oblique plane having a non-null component in a direction perpendicular to the plane in which the prongs 13 move. Said additional forces F2 are attributable to the reaction of the branches and also to the movements in the upward-downward direction impressed by the operator when maneuvering the shaker apparatus.

The application of these additional forces F2 in the direction perpendicular to the plane in which the prongs 13 move (and therefore to the plane in which the prong holder arms 5 lie) generates tilting torques on the prong holder arms 5 at their respective pivot pins 7.

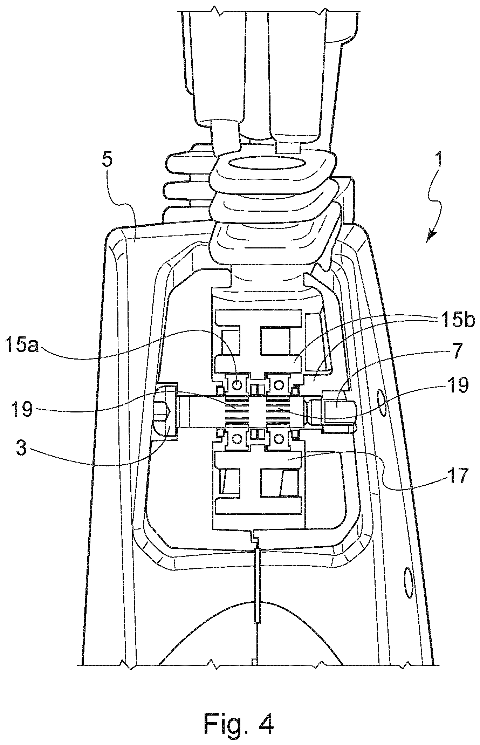

As clearly visible in Figure 4, in order to take into account and manage these tilting torques generated during use of the shaker apparatus, each prong holder arm 5 is rotatably mounted to the respective pivot pin 7 by means of the least two rolling bearings 15a, 15b.

Said rolling bearings 15a, 15b are preferably arranged at a mutual distance, as shown in Figure 4.

In particular, in the preferred embodiment shown in the Figures, there are provided two rolling bearings 15a, 15b distanced from each other.

Said rolling bearings 15a, 15b preferably have a mutual distance of at least 2 mm, even more preferably of at least 3 mm.

Said rolling bearings 15a, 15b are, for example, ball bearings.

Each of said rolling bearing comprises an inner ring integral with the respective pivot pin 7 and an outer ring integral with the respective prong holder arm 5, said inner ring and said outer ring defining therebetween tracks for the rolling elements.

While the rolling bearings, especially the small-sized ones, when taken individually, are completely unsuitable to withstand tilting torques (unless said torques are very small), such tilting forces are effectively withstood by two rolling bearings, especially if they are arranged at a distance from each other.

As a result, the rolling tracks of the bearings 15a, 15b will not deform during use and there will be no deterioration in the retention of the rolling elements (e.g. balls) within these tracks. This results in a reduction of the vibrations transmitted to the operator and in an increased reliability of the shaker apparatus.

As can be seen in Figure 4, advantageously, the bearings 15a, 15b are not assembled in place during the process of molding the prong holder arms. On the contrary, the bearings can be mounted after the molding process, by restraining the outer ring of each bearing to a plastic collar 17 integral with the body of the prong holder arm and the inner ring on the pivot pin 7, for example by means of calibrated shims 19.

In this way the bearings 15a, 15b can be prevented from being axially preloaded during tightening of the respective pivot pin 7.

The embodiment described in detail above is not to be understood in any way in a limiting sense and numerous modifications and variations are possible without leaving the scope of protection as defined by the appended claims.

## Claims

1. A portable shaker apparatus for harvesting olives, of the type comprising a maneuvering shaft, at an end of which there is provided a head (1) to which one or more prong holder arms (5) are mounted, each of which carries a plurality of prongs (13) extending therefrom, each of said prong holder arms (5) being rotatably mounted to said head (1) by means of a respective pivot pin (7) integral to said head, wherein said apparatus further comprises a drive device and a motion transmission system for transmitting motion from said drive device to said one or more prong holder arms, said motion transmission system being configured for imparting a reciprocating rotary movement to said one or more prong holder arms in a plane in which said prong holder arms lie, or in a plane substantially parallel thereto, **characterized in that** each of said prong holder arms (5) is mounted to the corresponding pivot pin (7) with the interposition of at least two rolling bearings (15a, 15b).

2. The portable shaker apparatus according to claim 1, wherein each of said prong holder arms (5) is mounted to its corresponding pivot pin (7) with the interposition of at least two rolling bearings (15a, 15b) arranged side by side to each other.

3. The portable shaker apparatus according to claim 1, wherein each of said prong holder arms (5) is mounted to its corresponding pivot pin (7) with the interposition of at least two rolling bearings (15a, 15b) arranged at a mutual distance.

4. The portable shaker apparatus according to claim 3, wherein each of said prong holder arms (5) is mounted to its corresponding pivot pin (7) with the interposition of two rolling bearings (15a, 15b) arranged at a distance from each other.

5. The portable shaker apparatus according to claim 3 o 4, wherein said rolling bearings (15a, 15b) have a mutual distance of at least 2 mm, preferably of at least 3 mm.

6. The portable shaker apparatus according to any one of the preceding claims, wherein said rolling bearings (15a, 15b) are ball bearings.

7. The portable shaker apparatus according to any one of the preceding claims, wherein there are provided two prong holder arms (5) projecting from opposite sides of said head (1).

8. The portable shaker apparatus according to any one of the preceding claims, wherein each of said prong holder arms (5) carries a plurality of prongs (13) arranged uniformly distributed along the extension thereof.

9. The portable shaker apparatus according to any one of the preceding claims, wherein said prongs (13) are inclined at various angles with respect to one another and to their respective prong holder arm (5).

## Patentansprüche

1. Tragbare Schlagvorrichtung zur Ernte von Oliven, einer Art, die eine Manövrierwelle aufweist, die an einem Ende mit einem Kopf (1) versehen ist, an dem ein oder mehrere Zinkenhalterarme (5) montiert sind, von denen jeder mehrere Zinken (13) trägt, die von ihm abstehen, wobei jeder der Zinkenhalterarme (5) drehbar an dem Kopf (1) mittels eines entsprechenden Drehstifts (7), der integral mit dem Kopf ist, montiert ist, wobei die Vorrichtung zudem einen Antrieb und ein Bewegungsübertragungssystem zum Übertragen von Bewegung von dem Antrieb auf den einen oder die mehreren Zinkenhalterarme aufweist, wobei das Bewegungsübertragungssystem dafür ausgelegt ist, eine hin und her gehende Drehbewegung des einen oder der mehreren Zinkenhalterarme in einer Ebene zu bewirken, in der die Zinkenhalterarme liegen oder in einer Ebene, die im Wesentlichen parallel dazu ist, **dadurch gekennzeichnet, dass** jeder der Zinkenhalterarme (5) an dem entsprechenden Drehstift (7) unter Zwischenlage von wenigstens zwei Wälzlagern (15a, 15b) montiert ist.

2. Tragbare Schlagvorrichtung nach Anspruch 1, wobei jeder der Zinkenhalterarme (5) an seinem entsprechenden Drehstift (7) unter Zwischenlage von wenigstens zwei Wälzlagern (15a, 15b) montiert ist, die nebeneinander angeordnet sind.

3. Tragbare Schlagvorrichtung nach Anspruch 1, wobei jeder der Zinkenhalterarme (5) an seinem entsprechenden Drehstift (7) unter Zwischenlage von wenigstens zwei Wälzlagern (15a, 15b) montiert ist, die in einem gegenseitigen Abstand angeordnet sind.

4. Tragbare Schlagvorrichtung nach Anspruch 3, wobei jeder der Zinkenhalterarme (5) an seiner entsprechenden Drehstift (7) unter Zwischenlage von zwei Wälzlagern (15a, 15b) montiert ist, die in einem Abstand von einander angeordnet sind.

5. Tragbare Schlagvorrichtung nach Anspruch 3 oder 4, wobei die Wälzlager (15a,15b) einen gegenseitigen Abstand von wenigstens 2 mm, vorzugsweise von wenigstens 3 mm haben.

6. Tragbare Schlagvorrichtung nach einem der vorstehenden Ansprüche, wobei die Wälzlager (15a, 15b) Kugellager sind.

7. Tragbare Schlagvorrichtung nach einem der vorstehenden Ansprüche, wobei zwei Zinkenhalterarme (5) vorgesehen sind, die von gegenüberliegenden Seiten des Kopfes (1) abstehen.

8. Tragbare Schlagvorrichtung nach einem der vorstehenden Ansprüche, wobei jeder der Zinkenhalterarme (5) mehrere Zinken (13) trägt, die entlang seiner Ausdehnung gleichmäßig verteilt sind.

9. Tragbare Schlagvorrichtung nach einem der vorstehenden Ansprüche, wobei die Zinken (13) zueinander und zu dem entsprechenden Zinkenhalterarm (5) unter unterschiedlichen Winkeln geneigt sind.

## Revendications

1. - Appareil batteur portable pour la récolte des olives, du type comprenant un arbre de manœuvre, à une extrémité duquel se trouve une tête (1) sur laquelle un ou plusieurs bras porte-fourchons (5) sont montés, chacun portant une pluralité de fourchons (13) s'étendant à partir de celui-ci, chacun desdits bras porte-fourchons (5) étant monté de manière rotative sur ladite tête (1) au moyen d'un axe de pivotement respectif (7) solidaire de ladite tête, ledit appareil comprenant en outre un dispositif d'entraînement et un système de transmission de mouvement pour transmettre un mouvement dudit dispositif d'entraînement audit ou auxdits bras porte-fourchons, ledit système de transmission de mouvement étant configuré pour conférer un mouvement rotatif alternatif audit ou auxdits bras porte-fourchons dans un plan dans lequel s'étendent lesdits bras porte-fourchons, ou dans un plan sensiblement parallèle à celui-ci, **caractérisé par le fait que** chacun desdits bras porte-fourchons (5) est monté sur l'axe de pivotement correspondant (7) avec l'interposition d'au moins deux roulements (15a, 15b).

2. - Appareil batteur portable selon la revendication 1, dans lequel chacun des bras porte-fourchons (5) est monté sur son axe de pivotement correspondant (7) avec l'interposition d'au moins deux roulements (15a, 15b) disposés côte à côte.

3. - Appareil batteur portable selon la revendication 1, dans lequel chacun des bras porte-fourchons (5) est monté sur son axe de pivotement correspondant (7) avec l'interposition d'au moins deux roulements (15a, 15b) disposés à une distance mutuelle.

4. - Appareil batteur portable selon la revendication 3, dans lequel chacun des bras porte-fourchons (5) est monté sur son axe de pivotement correspondant (7) avec l'interposition de deux roulements (15a, 15b) disposés à une distance l'un de l'autre.

5. - Appareil batteur portable selon la revendication 3 ou 4, dans lequel lesdits roulements (15a, 15b) ont une distance mutuelle d'au moins 2 mm, de préférence d'au moins 3 mm.

6. - Appareil batteur portable selon l'une quelconque des revendications précédentes, dans lequel lesdits roulements (15a, 15b) sont des roulements à billes.

7. - Appareil batteur portable selon l'une quelconque des revendications précédentes, dans lequel sont prévus deux bras porte-fourchons (5) se projetant à partir de côtés opposés de ladite tête (1).

8. - Appareil batteur portable selon l'une quelconque des revendications précédentes, dans lequel chacun des bras porte-fourchons (5) porte une pluralité de fourchons (13) disposés de manière uniformément répartie le long de son extension.

9. - Appareil batteur portable selon l'une quelconque des revendications précédentes, dans lequel lesdits fourchons (13) sont inclinés à divers angles les uns par rapport aux autres et par rapport à leur bras porte-fourchons respectif (5).
